# EUROPÄISCHE PATENTSCHRIFT

(11) **EP 0 490 136 B1**
(45) Veröffentlichungstag und Bekanntmachung des Hinweises auf die Patenterteilung: **03.05.1995**
(21) Anmeldenummer: 91119842.2
(22) Anmeldetag: 21.11.1991
(51) Int. Cl.: C09J 161/04, C09J 161/06, C08K 3/00, F16D 69/00

(54) **Heisshärtbarer Klebstoff**
Hot setting adhesive
Adhésif thermodurcissable

(30) Priorität: 12.12.1990 DE 4039636
(43) Veröffentlichungstag der Anmeldung: 17.06.1992
(73) Patentinhaber: Beiersdorf Aktiengesellschaft, 20245 Hamburg (DE)
(72) Erfinder: Engeldinger, Hans Karl, W-2000 Hamburg 54 (DE); Siepmann, Jürgen, W-2082 Moorrege (DE); Kramer, Jürgen, Dr., W-2107 Rosengarten (DE)

(56) Entgegenhaltungen:
- US-A- 3 910 857
- US-A- 4 216 133
- US-A- 4 268 657
- US-A- 4 539 343
- File supplier PAJ/JPO
- Derwent Publications Ltd., London, GB; AN 84-191797
- Derwent Publications Ltd., London, GB; AN 78-50377A

## Beschreibung

Die Aufgabe von technischen Reibbelägen besteht darin, Bewegungsenergie durch Reibung abzubauen, also in Wärme umzuwandeln. Der Reibbelag/Metall-Verbund muß also hohen Temperaturen standhalten. Dies gilt besonders für Trommel- und in noch höherem Maß für Scheibenbremsen.

Als klassische Verbindungsmethode hatte sich das Nieten von Reibbelag und Stahlträger etabliert - mit den Nachteilen von punktueller Kraftübertragung, von Materialschwächung durch Bohrungen und von partieller Metall/Metall-Reibung zwischen Niet und Bremstrommel. Mit der Verbindungsmethode Kleben konnte das Nieten später vielfach ersetzt oder ergänzt werden. Selbst bei der Herstellung von Scheibenbremsen, bei deren späteren Einsatz Temperaturen über 400°C auftreten können, wird seit geraumer Zeit geklebt. Es werden vornehmlich lösungsmittelhaltige Klebstoffe, vor allem auf Phenolharzbasis, z.T. kombiniert mit Nitrilkautschuk, verwendet.

Klebstoffe mit Lösungsmittel weisen die bekannten Nachteile der Feuergefährlichkeit und/oder Gesundheitsschädlichkeit auf, letzteres besonders dort, wo noch Chlorkohlenwasserstoffe wie Methylenchlorid Verwendung finden (z.B. heute noch in Bremsenklebstoffen). Aus diesen Gründen suchen die Bremsenhersteller nach hochtemperaturfesten, lösungsmittelfreien Klebstoffen.

Es sind auch bereits heißhärtende Klebstoffe bekannt, die auch pulverförmig sein können, vgl. US-PS 3.655.818 und 3.748.289, auf der Basis von Epoxidharzen und Dicyandiamid als Härter, oder auch DE-OS 2.926.945 auf der Basis von Präpolymeren aus der Gruppe der Polyesterimide, Polyamidimide und Polyhydantoine bzw. auf Acrylatbasis. Die hohen Anforderungen einer Verklebung von Bremsbelägen für Trommel- oder Scheibenbremsen können derartige Klebstoffe jedoch nur teilweise erfüllen.

Aufgabe der Erfindung war es, hier Abhilfe zu schaffen und einen hochtemperaturfesten Klebstoff zu schaffen, der einerseits lösungsmittelfrei und pulverförmig sein soll, andererseits aber zum Verkleben von Bremsbelägen geeignet ist und die daran gestellten hohen Anforderungen erfüllt.

Demgemäß betrifft die Erfindung die in den Ansprüchen näher gekennzeichneten Klebstoffe, nämlich lösungsmittelfreie, pulverförmige, heißhärtbare Klebstoffe, welche an Reibbelag/Stahl-Verklebungen im Vergleich mit marktgängigen lösungsmittelhaltigen Bremsenklebstoffen unter mechanischer Last mindestens gleich hohen Temperaturen (bis über 400°C) standhalten.

Die erfindungsgemäßen Klebstoffe sind durch eine Basis aus Festharz gekennzeichnet - entweder Phenol (Resol- u./o. Novolak) oder Epoxi-Novolak, jeweils mit latenten Härtern - oder Kombinationen aus beiden Systemen. Überraschend stellte sich heraus, daß diese Harzsysteme in Verbindung mit anorganischen Pigmenten insbesondere mit Eisenoxiden, Quarz und/oder Kaolinit, Verklebungen mit besonders hoher Wärmebeständigkeit ermöglichen.

Die erfindungsgemäßen Klebstoffe lassen sich herstellen, indem die Harze unter kurzzeitiger Erwärmung geschmolzen und mit den übrigen pulverförmigen Bestandteilen vermischt werden, z.B. in einem Kneter. Nach Abkühlen und Erstarrung kann das Gemisch granuliert und zu Pulver vermahlen werden.

Eine weitere Möglichkeit der Herstellung besteht darin, die einzelnen Bestandteile als separate Pulver zusammenzugeben und in einem geeigneten Behälter mit schnell rotierenden Mischelementen möglichst homogen zu vermengen.

Die Beschichtung der zu verklebenden Flächen mit dem erfindunsgemäßen Klebstoff kann vorteilhaft auf zwei Arten erfolgen:
a) Durch Aufrieseln des Pulvers, z.B. über ein Rüttelsieb; dazu ist es zweckmäßig, die zu beschichtenden Oberflächen aufzuheizen, um ein Anhaften des Pulvers zu erreichen.
b) Durch elektrostatisches Aufsprühen; besonders geeignet für unebene und gewölbte, elektrisch leitfähige Flächen.

Das vorbeifallende Pulver kann aufgefangen und in den Produktionskreislauf zurückgeführt werden, so daß keine oder nur geringe Verluste entstehen.

Nach dem Beschichten werden die zu verklebenden Teile zusammengefügt und in einer Haltevorrichtung der Heißhärtung zugeführt. Die Härtung erfolgt bevorzugt unter Druck, z.B. innerhalb einer Stunde bei 180°C.

Auf solche Weise verklebte Prüfkörper mit 2 cm² Klebfläche aus Stahl und Bremsbelag (asbestfrei) erreichten im Hochtemperatur-Test unter 10 N Last (Kippscherbelastung) Temperaturen zwischen 400 und 450°C bis zum Bruch.

Weiterhin führten Trennversuche an ebenso verklebten Original-Trommelbremsteilen bei ca. 300°C überwiegend zur Zerstörung des Reibbelages und nur zu geringem Teil zur Trennung in der Klebfuge.

Im folgenden wird die Erfindung anhand von Beispielen erläutert, ohne sie damit einschränken zu wollen. %-Angaben sind Gewichts-%.

| **Beispiel 1** | |
|---|---|
| Phenolharz, Novolaktyp | 40,0 % |
| Hexamethylentetramin | 3,0 % |
| China-Clay | 30,0 % |
| Quarzmehl | 37,0 % |

| **Beispiel 2** | |
|---|---|
| Phenolharz, Novolaktyp | 50,0 % |
| Hexamethylentetramin | 4,0 % |
| Eisenoxid, rot | 25,0 % |
| China-Clay | 11,0 % |
| Quarzmehl | 10,0 % |

## Patentansprüche

1. Verwendung eines heißhärtbaren Klebstoffs in Pulverform und lösungsmittelfrei, enthaltend eine Mischung aus festem Phenolharz mit latentem Härter in Kombination mit einer anorganischen Pigment-Mischung, zum Verkleben von Bremsbelägen für Trommel und Scheibenbremsen.

2. Verwendung nach Anspruch 1, dadurch gekennzeichnet, daß die Pigment-Mischung aus Siliziumdioxid, Eisenoxid und Kaolinit besteht.

3. Verwendung nach Anspruch 1, wobei der Klebstoff 2 - 80 Gew.-%, insbesondere 25 - 55 Gew.-% festes Phenolharz, 2 - 10 Gew.-%, insbesondere 3 - 7 Gew.-% latenten Härter, und 22 - 96 Gew.-%, insbesondere 30 - 80 Gew.-% einer anorganischen Pigment-Mischung enthält.

4. Verwendung nach Anspruch 2, wobei der Klebstoff 2 - 80 Gew.-%, insbesondere 25 - 55 Gew.-% festes Phenolharz, 2 - 10 Gew.-%, insbesondere 3 - 7 Gew.-% latenten Härter, 20 - 60 Gew.-%, insbesondere 30 - 45 Gew.-% Quarz, 0 - 40 Gew.-%, insbesondere 20 - 30 Gew.-% Eisenoxid, und 2 - 10 Gew.-%, insbesondere 1,5 - 5,5 Gew.-% Kaolinit enthält.

5. Verwendung nach Anspruch 1, wobei der Klebstoff Hexamethylentetramin als latenten Härter enthält.

## Claims

1. Use of a heat-curable adhesive in powder form and solvent-free, containing a mixture of solid phenol resin with latent hardener in combination with an inorganic pigment mixture, for the adhesive bonding of brake liners for drum and disc brakes.

2. Use according to Claim 1, characterised in that the pigment mixture consists of silica, iron oxide and kaolinite.

3. Use according to Claim 1, the adhesive containing 2-80% by weight, in particular 25-55% by weight, of solid phenolic resin, 2-10% by weight, in particular 3-7% by weight, of latent hardener and 22-96% by weight, in particular 30-80% by weight, of an inorganic pigment mixture.

4. Use according to Claim 2, the adhesive containing 2-80% by weight, in particular 25-55% by weight, of solid phenolic resin, 2-10% by weight, in particular 3-7% by weight, of latent hardener, 20-60% by weight, in particular 30-45% by weight, of quartz, 0-40% by weight, in particular 20-30% by weight, of iron oxide and 2-10% by weight, in particular 1.5-5.5% by weight, of kaolinite.

5. Use according to Claim 1, the adhesive containing hexamethylene tetramine as latent hardener.

## Revendications

1. Utilisation d'un adhésif thermodurcissable en forme de poudre et exempt de solvants, contenant un mélange de résine phénolique solide avec agent de durcissement latent en combinaison avec un mélange pigmentaire minéral, pour le collage de garnitures de frein pour des freins à tambours et des freins à disques.

2. Utilisation selon la revendication 1, caractérisé en ce que le mélange pigmentaire se compose de dioxyde de silicium, d'oxyde de fer et de kaolinite.

3. Utilisation selon la revendication 1, l'adhésif contenant de 2 - 80 % en poids, en particulier de 25 - 55 % en poids de résine phénolique solide, de 2 - 10 % en poids, en particulier de 3 - 7 % en poids d'agent de durcissement latent, et de 22 - 96 % en poids, en particulier de 30 - 80 % en poids d'un mélange pigmentaire minéral.

4. Utilisation selon la revendication 2, l'adhésif contenant de 2 - 80 % en poids, en particulier de 25 - 55 % en poids de résine phénolique solide, de 2 - 10 % en poids, en particulier de 3 - 7 % en poids d'agent de durcissement latent, de 20 - 60 % en poids, en particulier de 30 - 45 % en poids de quartz, de 0 - 40 % en poids, en particulier de 20 - 30 % en poids d'oxyde de fer, et de 2 - 10 % en poids, en particulier de 1,5 - 5,5 % en poids de kaolinite.

5. Utilisation selon la revendication 1, l'adhésif contenant en tant qu'agent de durcissement latent de l'hexaméthylànetétramine.
